# DEMANDE DE BREVET EUROPEEN

(11) **EP 2 055 515 A1**
(43) Date de publication de la demande: **06.05.2009**
(21) Numéro de dépôt: 08166096.1
(22) Date de dépôt: 08.10.2008
(51) Int. Cl.: B60H 1/20

(54) **Système de chauffage de l'habitacle d'un véhicule automobile**

(30) Priorité: 30.10.2007 FR 0758681
(71) Demandeur: PEUGEOT CITROËN AUTOMOBILES S.A., 78140 Vélizy Villacoublay (FR)
(72) Inventeur: Robin, Jean-François, 78000 Versailles (FR); Le Lievre, Armel, 78360 Montesson (FR); Dumoulin, Pierre, 92250 La Garonne Colombes (FR)
(74) Mandataire: Ménès, Catherine

(57) **Abrégé**

Ce système de chauffage (10) comprend une ligne d'échappement (12) dans laquelle débouchent des moyens d'injection d'air (14) et des moyens d'allumage (16), la ligne d'échappement (12) comportant un échangeur de récupération thermique à l'échappement (18) adapté pour mettre la ligne d'échappement (12) en relation d'échange thermique avec un fluide servant au chauffage de l'habitacle.

Il comprend des moyens d'injection de carburant (26) reliés aux moyens d'allumage (16) ainsi que des moyens pour commander électriquement le fonctionnement des moyens d'injection d'air (14) et des moyens d'injection de carburant (26) de sorte que le système (10) est adapté pour chauffer l'habitacle lorsque le moteur du véhicule est à l'arrêt.

## Description

La présente invention concerne un système de chauffage de l'habitacle d'un véhicule automobile, du type comprenant une ligne d'échappement dans laquelle débouchent des moyens d'injection d'air et des moyens d'allumage, la ligne d'échappement comportant un échangeur de récupération thermique à l'échappement adapté pour mettre la ligne d'échappement en relation d'échange thermique avec un fluide servant au chauffage de l'habitacle.

On connaît, d'après le document FR-A1-2 766 763, un tel système adapté pour chauffer rapidement et efficacement l'habitacle pendant les première minutes de fonctionnement du véhicule.

Cependant, ce système n'est pas prévu pour chauffer l'habitacle lorsque le moteur du véhicule est arrêté.

L'invention a pour but de proposer un système qui permette d'offrir une fonction de préconditionnement avant le démarrage du moteur, assurant ainsi le réchauffement de l'habitacle avant utilisation du véhicule.

A cet effet, l'invention a pour objet un système de chauffage du type précité, caractérisé en ce qu'il comprend des moyens d'injection de carburant reliés aux moyens d'allumage ainsi que des moyens pour commander électriquement le fonctionnement des moyens d'injection d'air et des moyens d'injection de carburant de sorte que le système est adapté pour chauffer l'habitacle lorsque le moteur du véhicule est à l'arrêt.

Le système de chauffage selon l'invention peut comporter une ou plusieurs des caractéristiques suivantes :
- les moyens d'injection de carburant comprennent un injecteur de carburant alimenté par une pompe à carburant ;
- les moyens d'allumage comprennent une bougie à incandescence disposée en sortie des moyens d'injection de carburant ;
- les moyens d'injection d'air comprennent un conduit d'air alimenté par un compresseur d'air ;
- le système comprend un clapet anti-retour disposé entre la ligne d'échappement et les moyens d'injection d'air ;
- ledit échangeur de récupération thermique est traversé par un circuit d'eau alimenté par une pompe à eau et relié à un échangeur de chauffage de l'habitacle adapté pour mettre l'eau en relation d'échange thermique avec de l'air de chauffage de l'habitacle ;
- les moyens d'injection d'air sont disposés en amont des moyens d'allumage, eux-mêmes disposés en amont dudit échangeur de récupération thermique relativement au sens d'écoulement des gaz dans la ligne d'échappement ; et
- le système comprend une télécommande propre à commander électriquement le système de chauffage.

L'invention a également pour objet un véhicule automobile, caractérisé en ce qu'il comprend un système de chauffage tel que décrit précédemment.

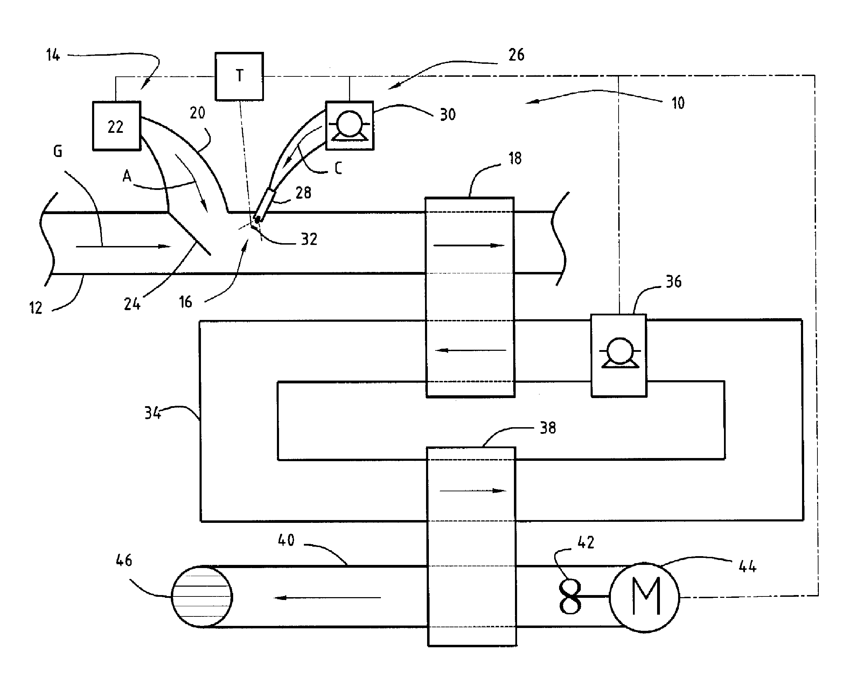

L'invention sera mieux comprise à la lecture de la description qui va suivre, donnée uniquement à titre d'exemple et faite en se référant à l'unique figure annexée qui représente, de façon très schématique, un système de chauffage selon l'invention.

Cette figure illustre un système de chauffage 10 destiné à chauffer l'habitacle d'un véhicule automobile lorsque le moteur de ce dernier est à l'arrêt.

Ce système 10 comprend une ligne d'échappement 12 dans laquelle débouchent des moyens d'injection d'air 14 et des moyens d'allumage 16.

La ligne d'échappement 12 comporte un échangeur de récupération thermique à l'échappement 18 adapté pour mettre la ligne d'échappement 12 en relation d'échange thermique avec un fluide servant au chauffage de l'habitacle.

Les moyens d'injection d'air 14 sont disposés en amont des moyens d'allumage 16, eux-mêmes disposés en amont de l'échangeur de récupération thermique 18 relativement au sens G d'écoulement des gaz dans la ligne d'échappement 12.

Les moyens d'injection d'air 14 comprennent un conduit d'air 20 débouchant dans la ligne d'échappement 12 et alimenté par un compresseur d'air 22 de façon à injecter de l'air, représenté par la flèche A, dans la ligne d'échappement 12.

Le système 10 comprend un clapet anti-retour 24 disposé entre la ligne d'échappement 12 et les moyens d'injection d'air 14, à la sortie du conduit d'air 20.

Le clapet 24 est propre à assurer une circulation correcte du débit d'air vers l'échangeur de récupération thermique 18 lorsque de l'air A est injecté dans la ligne d'échappement 12 en bloquant tout retour d'air vers le moteur du véhicule.

Le clapet 24 est également propre à assurer une circulation correcte des gaz d'échappement G lorsque le moteur fonctionne en empêchant ces gaz de remonter vers le compresseur d'air 22.

Le système 10 comprend des moyens d'injection de carburant 26 reliés aux moyens d'allumage 16.

Les moyens d'injection de carburant 26 comprennent un injecteur de carburant 28 alimenté par une pompe à carburant électrique 30 de type piston à impulsion, de façon à injecter du carburant, représenté par la flèche C, dans la ligne d'échappement 12.

Les moyens d'allumage 16 comprennent une bougie à incandescence 32 disposée en sortie des moyens d'injection de carburant 26, face à l'injecteur de carburant 28, pour l'allumage à froid du carburant C.

L'échangeur de récupération thermique 18 est traversé par un circuit d'eau fermé 34 alimenté par une pompe à eau électrique 36 et relié à un échangeur de chauffage de l'habitacle 38 adapté pour mettre l'eau en relation d'échange thermique avec de l'air de chauffage de l'habitacle.

L'échangeur de chauffage de l'habitacle 38 est traversé par un circuit d'air 40 alimenté par un ventilateur 42 entraîné par un moteur 44.

Le circuit d'air 40 débouche sur un aérateur 46 de l'habitacle du véhicule.

Le système 10 comprend des moyens pour commander électriquement le fonctionnement du compresseur 22, de la pompe 30 d'injection de carburant, de la bougie 32, de la pompe 36 et du moteur 44, notamment une télécommande T.

Le procédé de chauffage de l'habitacle du véhicule à l'aide du système de chauffage 10 va maintenant être décrit.

Initialement, un utilisateur, désirant chauffer l'habitacle de son véhicule avant utilisation, déclenche grâce à la télécommande T la mise en route du système de chauffage 10.

Le compresseur d'air 22 envoie de l'air A dans la ligne d'échappement 12 via le conduit d'air 20, le clapet 24 s'ouvrant alors.

La pompe à carburant 30 fournit du carburant C à l'injecteur de carburant 28, qui vaporise un jet de carburant C dans la ligne d'échappement 12.

La bougie à incandescence 32 initie alors la combustion du carburant C injecté.

Cette combustion permet de chauffer l'air A injecté qui circule dans la ligne d'échappement 12 en direction de l'échangeur de récupération thermique 18.

La pompe à eau 36 fait circuler dans le circuit d'eau 34 de l'eau qui récupère l'énergie thermique de l'air A chauffé, par l'intermédiaire de l'échangeur de récupération thermique 18.

L'eau chauffée traverse ensuite l'échangeur de chauffage de l'habitacle 38, qui transfère l'énergie thermique de l'eau à de l'air fourni par l'ensemble ventilateur 42 / moteur 44.

L'air chaud circule alors dans le circuit d'air 40 en direction de l'aérateur 46 pour être diffusé dans l'habitacle du véhicule.

Le système de chauffage selon l'invention permet donc de chauffer l'habitacle d'un véhicule automobile avant son utilisation, offrant ainsi aux passagers un environnement agréable dès qu'ils pénètrent dans le véhicule, notamment lorsqu'il fait très froid à l'extérieur du véhicule.

De plus, l'invention propose une solution simple, fiable et économique qui nécessite uniquement l'ajout d'une pompe à carburant, d'un injecteur de carburant et d'un clapet anti-retour dans un véhicule existant.

Dans un autre mode de réalisation de l'invention, la demande de chauffage de l'habitacle avant le démarrage du moteur est préprogrammée via une horloge qui déclenche la mise en route du système de chauffage 10.

## Revendications

1. Système de chauffage (10) de l'habitacle d'un véhicule automobile, du type comprenant une ligne d'échappement (12) d'un moteur thermique équipant ledit véhicule dans laquelle débouchent des moyens d'injection d'air (14) et des moyens d'allumage (16), la ligne d'échappement (12) comportant un échangeur de récupération thermique à l'échappement (18) adapté pour mettre la ligne d'échappement (12) en relation d'échange thermique avec un fluide servant au chauffage de l'habitacle, **caractérisé en ce qu'**il comprend des moyens d'injection de carburant (26) reliés aux moyens d'allumage (16) ainsi que des moyens pour commander électriquement le fonctionnement des moyens d'injection d'air (14) et des moyens d'injection de carburant (26) de sorte que le système (10) est adapté pour chauffer l'habitacle lorsque le moteur du véhicule est à l'arrêt.

2. Système de chauffage (10) selon la revendication 1, **caractérisé en ce que** les moyens d'injection de carburant (26) comprennent un injecteur de carburant (28) alimenté par une pompe à carburant (30).

3. Système de chauffage (10) selon la revendication 1 ou 2, **caractérisé en ce que** les moyens d'allumage (16) comprennent une bougie à incandescence (32) disposée en sortie des moyens d'injection de carburant (26).

4. Système de chauffage (10) selon l'une quelconque des revendications 1 à 3, **caractérisé en ce que** les moyens d'injection d'air (14) comprennent un conduit d'air (20) alimenté par un compresseur d'air (22).

5. Système de chauffage (10) selon l'une quelconque des revendications 1 à 4, **caractérisé en ce qu'**il comprend un clapet anti-retour (24) disposé entre la ligne d'échappement (12) et les moyens d'injection d'air (14).

6. Système de chauffage (10) selon l'une quelconque des revendications 1 à 5, **caractérisé en ce que** ledit échangeur de récupération thermique (18) est traversé par un circuit d'eau (34) alimenté par une pompe à eau (36) et relié à un échangeur de chauffage de l'habitacle (38) adapté pour mettre l'eau en relation d'échange thermique avec de l'air de chauffage de l'habitacle.

7. Système de chauffage (10) selon l'une quelconque des revendications 1 à 6, **caractérisé en ce que** les moyens d'injection d'air (14) sont disposés en amont des moyens d'allumage (16), eux-mêmes disposés en amont dudit échangeur de récupération thermique (18) relativement au sens (G) d'écoulement des gaz dans la ligne d'échappement (12).

8. Système de chauffage (10) selon l'une quelconque des revendications 1 à 7, **caractérisé en ce qu'**il comprend une télécommande (T) propre à commander électriquement le système de chauffage (10).

9. Véhicule automobile, **caractérisé en ce qu'**il comprend un système de chauffage (10) selon l'une quelconque des revendications 1 à 8.
